# EUROPÄISCHE PATENTANMELDUNG

(11) **EP 2 226 919 A2**
(43) Veröffentlichungstag der Anmeldung: **08.09.2010**
(21) Anmeldenummer: 10002285.4
(22) Anmeldetag: 05.03.2010
(51) Int. Cl.: H02K 7/14

(54) **Ventilatoreinheit**

(30) Priorität: 07.03.2009 DE 102009013372
(71) Anmelder: Albig, Jürgen, 74542 Braunsbach (DE); Wieland, Helmut, 73635 Kupferzell (DE)
(72) Erfinder: Albig, Jürgen, 74542 Braunsbach (DE); Wieland, Helmut, 74635 Kupferzell (DE); Täschner, Klaus, 84028 Landshut (DE)

(57) **Zusammenfassung**

Die Ventilatoreinheit hat einen Antriebsmotor (1), der mit einem Laufrad (9) antriebsverbunden ist. Der Antriebsmotor (1) ist ein permanentmagneterregter Synchronmotor in Innenläufer-Bauweise. Auf seiner Motorwelle (3) ist das Laufrad (9) so angeordnet, dass es im Bereich neben dem Motorgehäuse (2) liegt. Der Antriebsmotor (1) ragt nicht in das Laufrad (9), so dass ein hoher Wirkungsgrad des Laufrades (9) erreicht wird. In Verbindung mit dem permanentmagneterregten Synchronmotor in Innenläufer-Bauweise ergibt sich eine Ventilatoreinheit mit höchstem Wirkungsgrad.

## Beschreibung

Die Erfindung betrifft eine Ventilatoreinheit nach dem Oberbegriff des Anspruches 1.

Es sind Ventilatoreinheiten bekannt, die vorzugsweise als frei laufende Radiallaufräder eingesetzt werden, die mit Asynchronmotoren in Form von Innenläufermotoren angetrieben werden. Es sind auch Ventilatoreinheiten bekannt, deren Motoren als Außenläufermotoren in Form von Asynchronmotoren oder permanentmagneterregten Synchronmotoren ausgebildet sind. Nachteilig bei Außenläufermotoren mit direkt angetriebenen Ventilatoren ist, dass der Motor in das Laufrad ragt und damit den aerodynamischen Wirkungsgrad erheblich verschlechtert.

Der Erfindung liegt die Aufgabe zugrunde, die gattungsgemäße Ventilatoreinheit so auszubilden, dass sie bei einfacher Ausbildung einen hohen Wirkungsgrad hat.

Diese Aufgabe wird bei der gattungsgemäßen Ventilatoreinheit erfindungsgemäß mit den kennzeichnenden Merkmalen des Anspruches 1 gelöst.
Bei der erfindungsgemäßen Ventilatoreinheit wird als Antriebsmotor ein permanentmagneterregter Synchronmotor in Innenläufer-Bauweise eingesetzt. Er wird über die Motorwelle direkt mit dem Ventilator-Laufrad verbunden, das sich im Bereich neben dem Motorgehäuse befindet. Der permanentmagneterregte Synchronmotor in Innenläufer-Bauweise stellt einen Hochwirkungsgradmotor dar. Er ragt nicht in das Laufrad, so dass ein hoher Wirkungsgrad des Laufrades erreicht wird. In Verbindung mit dem permanentmagneterregten Synchronmotor in Innenläufer-Bauweise ergibt sich somit eine Ventilatoreinheit mit höchstem Wirkungsgrad.

Vorteilhaft hat das Laufrad Abstand vom Motorgehäuse. Dadurch ergibt sich ein hervorragender aerodynamischer Wirkungsgrad.

Bei einer einfachen konstruktiven Gestaltung sitzt das Laufrad mittels einer Nabe direkt auf der Motorwelle.

Die Nabe weist vorteilhaft einen Befestigungsflansch auf, an dem das Laufrad befestigt werden kann.

Das Laufrad ist auf der Motorwelle vorteilhaft so befestigt, dass der axiale Abstand zwischen dem Motorgehäuse und dem Laufrad kleiner ist als die axiale Breite des Laufrades. Dadurch ergibt sich zum einen eine geringe axiale Länge der Ventilatoreinheit. Zum anderen wird der aerodynamische Wirkungsgrad der Ventilatoreinheit nicht beeinträchtigt.

Die Ventilatoreinheit ist vorteilhaft Bestandteil eines Einbaumoduls.

Bevorzugt sind die Ventilatoreinheit oder das Einbaumodul mit einer Antriebselektronik versehen.

Es ist von Vorteil, wenn die Antriebselektronik für den permanentmagneterregten Synchronmotor im Motor selbst untergebracht ist. Die Antriebselektronik kann aber auch innerhalb der Ventilatoreinheit an geeigneter Stelle vorgesehen sein.

Der permanentmagneterregte Synchronmotor kann geberlos, aber auch mit Kommutierungsgeber ausgebildet sein.

Um einen hohen Wirkungsgrad zu erreichen, ist das Laufrad vorteilhaft ein freilaufendes Radiallaufrad mit rückwärts gekrümmten Laufradschaufeln ohne Gehäuse.

Vorteilhaft weist das Laufrad weniger als etwa 20 Laufradschaufein auf.

Bei einer bevorzugten Ausführungsform wird das Einbaumodul freistehend in ein Gehäuse eingebaut.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Es zeigen
- Fig. 1: in Seitenansicht eine erfindungsgemäße Ventilatoreinheit,
- Fig. 2: einen Teil der Ventilatoreinheit gemäß Fig. 1 in vergrößerter Darstellung.

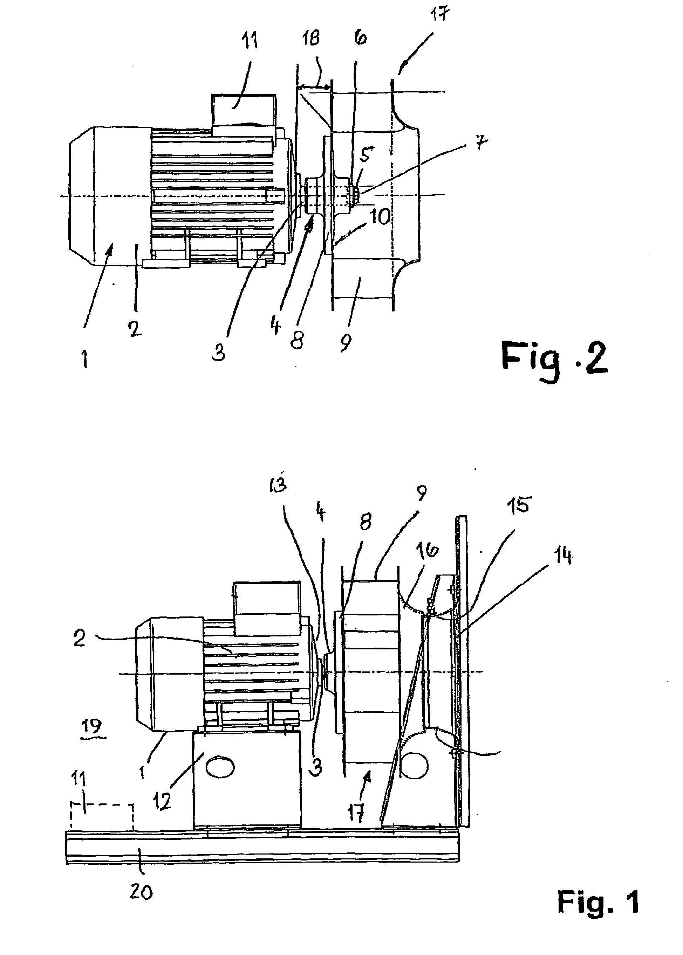

Die Ventilatoreinheit ist Teil eines Einbaumoduls 19 und hat einen Antriebsmotor 1, der ein permanentmagneterregter Synchronmotor ist. Er ist als Innenläufermotor ausgebildet und vorzugsweise ein elektronisch kommutierter Gleichstrommotor. Der Antriebsmotor 1 hat als Innenläufer einen (nicht dargestellten) Stator, der einen Rotor umgibt. Eine solche Bauweise eines Innenläufers ist bekannt und wird darum auch nicht näher erläutert. Der Antriebsmotor 1 hat ein Gehäuse 2, in dem der Stator und der Rotor untergebracht sind. Das Gehäuse 2 ist bevorzugt ein Gehäuse nach IEC 60034. Aus dem Gehäuse 2 ragt eine Motorwelle 3, auf der eine Nabe 4 drehfest sitzt. Wie Fig. 2 zeigt, ist die Nabe 4 auf der Motorwelle 3 mittels einer axialen Wellensicherung 5 axial gesichert. Die Wellensicherung 5 kann durch eine Unterlegscheibe 6 und eine Mutter 7 gebildet sein, die unter Zwischenlage der Unterlegscheibe 6 an der Nabe 4 anliegt und auf das über die Nabe vorstehende Wellenende geschraubt ist.

Auf der Nabe 4 befindet sich ein Befestigungsflansch 8, auf dem ein Laufrad 9 befestigt ist. Das Laufrad 9 wird vorzugsweise mit Schrauben 10, die über den Umfang des Befestigungsflansches 8 verteilt angeordnet sind, lösbar am Flansch 8 befestigt. Das Laufrad 9 kann die für den jeweiligen Einsatzfall zweckmäßigste Form haben.

Eine Antriebselektronik 11 für den permanentmagneterregten Synchronmotor kann in den Antriebsmotor 1 integriert sein. Die Antriebselektronik 11 kann aber auch Bestandteil des Einbaumoduls 19 sein. Beispielhaft ist in Fig. 1 die Antriebselektronik 11 (gestrichelte Linie) alternativ an einem Rahmen 20 des Einbaumoduls 19 vorgesehen.

Fig. 1 zeigt beispielhaft, dass der Antriebsmotor 1 auf einem Ständer 12 gelagert ist. Das Laufrad 9 ist so auf der Motorwelle 3 angeordnet, dass es Abstand von der dem Laufrad 9 zugewandten Stirnseite 13 des Motorgehäuses 2 hat. Das Laufrad 9 befindet sich im Bereich vor einer Ventilatoröffnung 14, die in einer Gebäudewand, in einer Maschinenwand und dergleichen vorgesehen sein kann und durch welche das Laufrad 9 die Luft fördert. An die Ventilatoröffnung 14 schließt in Richtung auf das Laufrad 9 eine Luftführung 15 an, die sich in bekannter Weise in Richtung auf das Laufrad 9 im Querschnitt stetig verjüngt. Die kreisförmigen Querschnitt aufweisende Luftführung 15 ragt mit geringem radialen Spiel in eine laufradseitige Luftführung 16, die sich in Richtung auf die wandseitige Luftführung 15 im Querschnitt stetig verringert und ebenfalls kreisförmigen Querschnitt hat. Das Laufrad 9 ist Bestandteil eines Radialventilators 17.

Der permanentmagneterregte Synchronmotor 1 ist über seine Motorwelle 3 direkt mit dem Laufrad 9 des Ventilators 17 gekoppelt. Die Ventilatoreinheit zeichnet sich dadurch aus, dass sie einen Hochwirkungsgradmotor in Form des permanentmagneterregten Synchronmotors 1 mit dem Laufrad 10 mit hohem Wirkungsgrad ohne Wirkungsgradverlust kombiniert. Da der Antriebsmotor 1 nicht in das Laufrad 9 ragt, wird der aerodynamische Wirkungsgrad nicht verschlechtert. Die Ventilatoreinheit zeichnet sich durch einen sehr hohen Wirkungsgrad aus.

Der permanentmagneterregte Synchronmotor kann geberlos, aber auch mit Kommutierungsgeber ausgebildet sein.

Das Einbaumodul 19 ist freistehend zum Einbau in ein Gehäuse, zum Beispiel in ein Klimazentralgerät, hervorragend geeignet. Die Ventilatoreinheit kommt dort zum Einsatz, wo es um höchste Anforderungen an den Systemwirkungsgrad der Ventilatoreinheit geht. Das Radiallaufrad 9 ist freilaufend ohne Gehäuse ausgebildet und hat bevorzugt rückwärts gekrümmte Laufradschaufeln..

Der Abstand zwischen dem Laufrad 9 und der Stirnseite 13 des Gehäuses 2 ist so gewählt, dass einerseits die Baulänge der Ventilatoreinheit gering ist, andererseits die Luftansaugung durch das Laufrad 9 nicht behindert wird. Der Antriebsmotor 1 zeichnet sich durch seine kompakte Ausbildung, hohen Wirkungsgrad und hohe Laufruhe aus. Vorteilhaft ist der axiale Abstand 18 zwischen dem Motorgehäuse 2 und dem Laufrad 9 kleiner als die in Achsrichtung gemessene Breite des Laufrades 9.

Die Ventilatoreinheit kann auch mit anderen Ventilatorbauarten, z. B. Axial- oder Diagonalventilatoren, ausgestattet sein. Das Laufrad weist vorteilhaft weniger als etwa 20 Laufradschaufeln auf.

## Patentansprüche

1. Ventilatoreinheit mit einem Antriebsmotor, der mit wenigstens einem Laufrad antriebsverbunden ist,
**dadurch gekennzeichnet, dass** der Antriebsmotor (1) ein permanentmagneterregter Synchronmotor in Innenläufer-Bauweise ist, auf dessen Motorwelle (3) das Laufrad (9) so angeordnet ist, dass es im Bereich neben dem Motorgehäuse (2) liegt.

2. Ventilatoreinheit nach Anspruch 1,
**dadurch gekennzeichnet, dass** das Laufrad (9) Abstand (18) vom Motorgehäuse (2) hat.

3. Ventilatoreinheit nach Anspruch 1 oder 2,
**dadurch gekennzeichnet, dass** das Laufrad (9) mit einer Nabe (4) auf der Motorwelle (3) sitzt.

4. Ventilatoreinheit nach Anspruch 3,
**dadurch gekennzeichnet, dass** die Nabe (4) einen Befestigungsflansch (8) aufweist, an dem das Laufrad (9) befestigt ist.

5. Ventilatoreinheit nach einem der Ansprüche 1 bis 4,
**dadurch gekennzeichnet, dass** der axiale Abstand (18) zwischen dem Motorgehäuse (2) und dem Laufrad (9) kleiner ist als die axiale Breite des Laufrades (9).

6. Ventilatoreinheit nach einem der Ansprüche 1 bis 5,
**dadurch gekennzeichnet, dass** die Ventilatoreinheit Bestandteil eines Einbaumoduls (19) ist.

7. Ventilatoreinheit nach einem der Ansprüche 1 bis 6,
**dadurch gekennzeichnet, dass** sie eine Antriebselektronik (11) aufweist.

8. Ventilatoreinheit nach Anspruch 7,
**dadurch gekennzeichnet, dass** die Antriebselektronik (11) in den Antriebsmotor (1) integriert ist.

9. Ventilatoreinheit nach einem der Ansprüche 1 bis 8,
**dadurch gekennzeichnet, dass** der Antriebsmotor (1) ein elektronisch kommutierter Gleichstrommotor ist.

10. Ventilatoreinheit nach einem der Ansprüche 1 bis 8,
**dadurch gekennzeichnet, dass** der Antriebsmotor geberlos ausgebildet ist.

11. Ventilatoreinheit nach einem der Ansprüche 1 bis 10,
**dadurch gekennzeichnet, dass** das Laufrad (9) ein freilaufendes Radiallaufrad mit rückwärts gekrümmten Laufradschaufeln ohne Gehäuse ist.

12. Ventilatoreinheit nach einem der Ansprüche 1 bis 11,
**dadurch gekennzeichnet, dass** das Laufrad (9) weniger als etwa 20 Laufradschaufeln aufweist.

13. Ventilatoreinheit nach einem der Ansprüche 6 bis 12,
**dadurch gekennzeichnet, dass** das Einbaumodul (19) freistehend in ein Gehäuse eingebaut wird.
